**Europäisches Patentamt**

**European Patent Office**

**Office européen des brevets**

(19)

(11) Veröffentlichungsnummer: **0 123 290**
**A2**

(12) # EUROPÄISCHE PATENTANMELDUNG

(21) Anmeldenummer: **84104446.4**

(22) Anmeldetag: **19.04.84**

(51) Int. Cl.³: **B 23 B 3/30**

(30) Priorität: **23.04.83 DE 8312044 U**

(43) Veröffentlichungstag der Anmeldung:
**31.10.84 Patentblatt 84/44**

(84) Benannte Vertragsstaaten:
**AT BE CH DE FR GB IT LI LU NL SE**

(71) Anmelder: **Ingenieurbüro Hermann Dietrich**
**Otto-Sabel-Strasse 4**
**D-6700 Ludwigshafen(DE)**

(72) Erfinder: **Dietrich, Hermann**
**Arnulfstrasse 34**
**D-6700 Ludwigshafen/Rhein(DE)**

(74) Vertreter: **Patentanwälte Zellentin**
**Zweibrückenstrasse 15**
**D-8000 München 2(DE)**

(54) Einrichtung zur Drehbearbeitung von langgestreckten, zylinderförmigen oder leicht konischen Werkstücken.

(57) Es wird eine Einrichtung zur Drehbearbeitung von langgestreckten, zylindrischen oder leicht konischen Werkstücken (88), insbesondere Patronenhülsen für Feuerwaffen, beschrieben, die in einem Gehäuse (17) wenigstens zwei angetriebene Drehspindeln (80) aufweist. Das Gehäuse (17) ist um eine Achse (16) schwenkbar aufgelagert und mittels eines Hydraulik- oder Pneumatikzylinders (22, 23) angetrieben. Das Gehäuse (17) wird durch den Hydraulikzylinder (22, 23) aus einer Anfangsstellung schrittweise in weitere Betriebsstellungen und wieder zurück verschwenkt. Als Werkzeuge zur Bearbeitung der Patronenhülsen (88) sind ein die Abzieherrille (93) und den Abzieherbund (92) formender Drehstahl und ein Abstechstahl (103) vorgesehen, die an einem Abstechschlitten (101) befestigt sind. Dieser Abstechschlitten (101) ist quer zur Achse der Drehspindel (80) auf einem Hauptschlitten (94) hin- und herverschiebbar geführt, der selbst wiederum in Richtung der Längsachse der Drehspindel (80) verfahrbar ist. Dadurch wird die Länge der Patronenhülse exakt bestimmt. Weiterhin ist jede Drehspindel (80) einzeln angetrieben, wobei mittels einer Kupplung (67) jede Drehspindel für sich an den Antrieb angeschaltet werden kann. Dadurch wird immer nur eine Drehspindel angetrieben, während die anderen nicht angetrieben bleiben. Damit wird die Beladezeit verkürzt und die Beladung vereinfacht.

FIG.1

EP 0 123 290 A2

PATENTANWÄLTE
ZELLENTIN
ZWEIBRÜCKENSTR. 15
8000 MÜNCHEN 2

0123290

Ingenieurbüro Hermann Dietrich

6700 Ludwigshafen

19. April 1984

K/Hu

Eu 84 316

"Einrichtung zur Drehbearbeitung von langgestreckten, zylinderförmigen oder leicht konischen Werkstücken"

Die Erfindung betrifft eine Einrichtung gemäß dem Oberbegriff des Anspruchs 1.

Derartige Einrichtungen dienen im wesentlichen zur Drehbearbeitung von Patronenhülsen. Bekannte Einrichtungen dieser Art besitzen ein Revolvergehäuse, in dem eine Anzahl von Drehspindeln angeordnet ist, die alle gleichzeitig mittels einer Antriebsvorrichtung angetrieben werden. In die Drehspindeln werden Patronenhülsen eingesetzt und nach Befüllung aller Drehspindeln der Antriebsmotor in Gang gesetzt und die einzelnen Patronenhülsen schrittweise zunächst mittels eines Formdrehstahles im Bereich der Abzieherrille und des Abziehbundes bearbeitet, sodann wird die Patronenhülse im Bereich des Hülsenhalses abgestochen und entgratet. Aufgrund der Tatsache, daß in dem Revolverkopf sämtliche Drehspindeln angetrieben sind, sind die Taktzeiten relativ hoch und darüber hinaus ist auch das Be- und Entladen relativ kompliziert.

Aufgabe der Erfindung ist es, eine Einrichtung der eingangs genannten Art zu schaffen, bei der die Nachteile der bekannten Einrichtungen vermieden sind. Insbesondere sollen die Be- und Entladevorgänge vereinfacht und die Taktzeiten verkürzt werden.

Diese Aufgabe wird erfindungsgemäß durch die Merkmale des Anspruchs 1 gelöst. Dadurch, daß erfindungsgemäß anstatt eines Revolvertisches oder Drehtisches ein Schwenkgehäuse vorgesehen ist, dessen Schwenkachse horizontal verläuft, und dadurch, daß das Gehäuse nicht mehr eine volle Umdrehung ausführen muß, sondern aus einer ersten Stellung jeweils in die nächsten Bearbeitungsstellungen und wieder zurück verbracht werden kann, wird der Beladevorgang erheblich vereinfacht und darüber hinaus die Taktzeiten erheblich verkürzt.

Die Bewegung des Gehäuses, das als Schwenkgehäuse ausgebildet ist, wird gemäß den kennzeichnenden Merkmalen des Anspruchs 2 mittels einer pneumatischen oder hydraulischen Steuereinrichtung betätigt, wobei zusätzlich Anschläge vorgesehen sind, gegen die das Schwenkgehäuse in den Endlagen der Schwenkbewegung anschlägt. Gegebenenfalls können diese Anschläge gedämpft sein.

Erfindungsgemäß ist gemäß kennzeichnendem Merkmal des Anspruchs 5 die Schwenkachse selbst angetrieben von einem Motor und über die angetriebene Schwenkachse werden die einzelnen Drehspindeln unter Zwischenfügung weiterer Getriebeeinrichtungen gemäß kennzeichnenden Merkmalen des Anspruchs 5 angetrieben.

Als Getriebe kommen vorzugsweise Zahnriementriebe in Frage.

Dadurch, daß die einzelnen Drehspindeln praktisch von jeweils einem eigenen Getriebe angetrieben werden, besteht die Möglichkeit, zwischen der Antriebsachse und den Drehspindeln eine Kupplung vorzusehen, mit der jeweils ein Getriebe für die Drehspindeln mit der Drehachse kuppelbar ist. Als Kupplung kommt vorzugsweise eine Elektromagnetkupplung in Frage. Der Vorteil, der hierdurch bewirkt wird, besteht im wesentlichen darin, daß bei der Drehbearbeitung eines ersten Werkstückes nur die tatsächlich arbeitende Drehspindel für dieses Werkstück angetrieben wird. Dadurch, daß über die Kupplungen die übrigen Drehspindeln vom Antrieb abgekuppelt sind, ist der Verschleiß der Lager in den Drehspindeln geringer und darüber hinaus besteht der Vorteil, daß die Beladung bei stehenden Drehspindeln und die Entladung erheblich vereinfacht wird.

Eine weitere Ausgestaltung der Erfindung ist den kennzeichnenden Merkmalen des Anspruchs 8 zu entnehmen. Dabei kann zweckmäßigerweise der Schlitten, der die beiden Drehwerkzeuge trägt, auf einem weiteren Schlitten aufgenommen werden, der eine U-Form hat, wobei der eine Schenkel einen Längsanschlag für das Werkstück aufweist.

Der wesentliche Vorteil dieser Ausgestaltung besteht darin, daß bei der Bearbeitung insbesondere von Patronenhülsen das eine Werkzeug, das die Abzieherrille und den Abzieherbund formt, fest dem Abstechwerkzeug, das die Länge der Hülse definiert, zugeordnet ist. Dies kann eben dadurch erfolgen, daß beide Werkzeuge über jeweils einen eigenen Werkzeughalter auf dem Schlitten, genauer gesagt, dem Werkzeughalteschlitten, der wiederum relativ zu dem Hauptschlitten in einer Richtung, die senkrecht zur Bewegung des Hauptschlittens verläuft, verschiebbar ist. Dadurch wird immer eine genaue und exakte Länge einer Patronenhülse erreicht und darüber hinaus wird die Bearbeitungszeit jeder einzelnen Hülse deutlich verringert, weil die Formbearbeitung und die Abstechbearbeitung zum gleichen Zeitpunkt durchgeführt werden.

Anhand der Zeichnung in der ein Ausführungsbeispiel der Erfindung dargestellt ist, sollen die Erfindung sowie weitere vorteilhafte Ausgestaltungen und Verbesserungen der Erfindung und weitere Vorteile näher erläutert und beschrieben werden. Es zeigen:

Fig. 1 eine Seitenansicht einer erfindungsgemäßen Dreheinrichtung,

Fig. 2   eine Schnittansicht gemäß der Linie II-II der

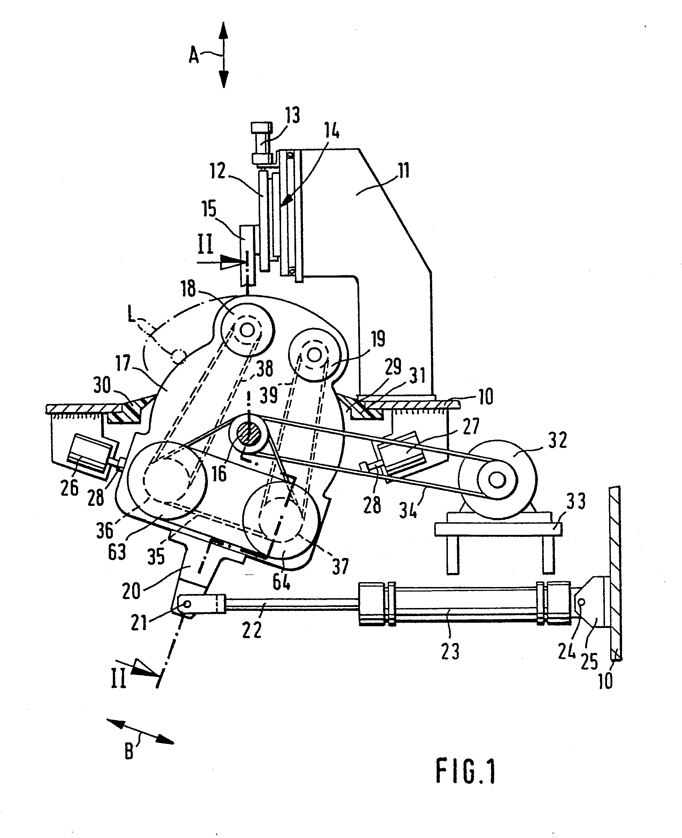

         Fig. 1, und

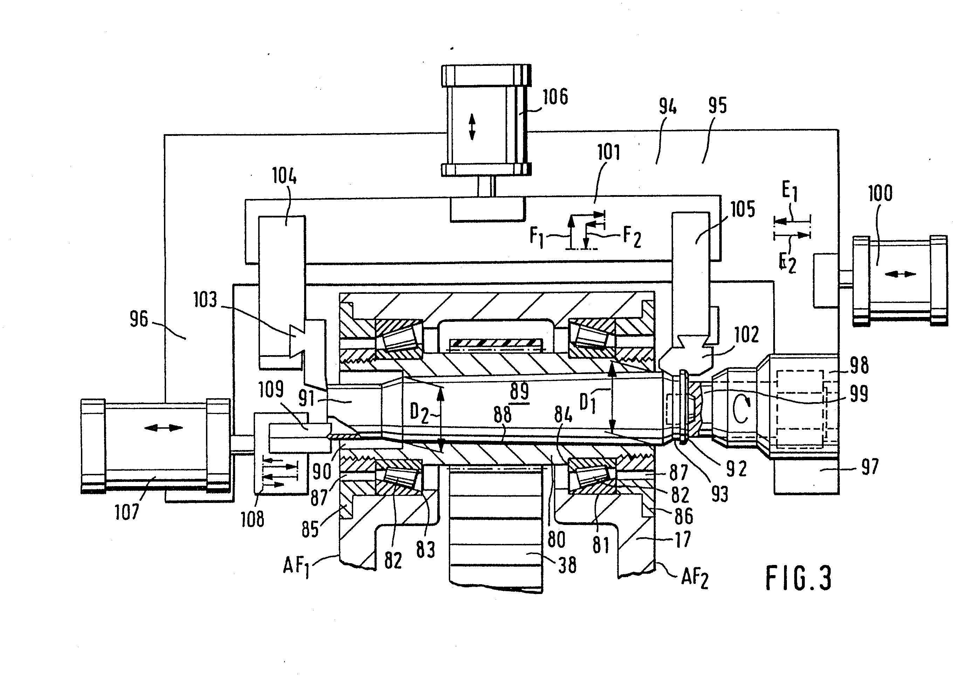

Fig. 3   eine Aufsicht auf die eigentliche Bearbeitungseinrichtung, teilweise geschnitten.

Die erfindungsgemäße Dreheinrichtung besitzt einen auf einem
nicht näher dargestellten Maschinenbett aufgelagerten Maschinentisch 10, auf dem ein Auslegerarm 11 befestigt ist,
der an seinem freien Ende einen vertikal in Doppelpfeilrichtung A bewegbaren Werkzeugschlitten 12 aufweist, der
von einem Hydraulik- oder Pneumatikzylinder 13 angetrieben
wird, der am Auslegerarm 11 befestigt ist. Der Werkzeugschlitten 12 ist in einer speziellen Schlittenführung 14
geführt, auf die nicht näher eingegangen werden soll, weil
diese allgemein Stand der Technik ist. Am Werkzeugschlitten ist ein Werkzeughalter 15 befestigt, der Werkzeuge
trägt, wie weiter unten näher erläutert werden soll.

Über eine zentrale Schwenkachse 16 ist ein Schwenkgehäuse 17
schwenkbar gelagert, an dessen oberem Ende zwei Werkstückhalteeinrichtungen 18 und 19 angeordnet sind. Diese Werkstückhalteeinrichtungen werden anhand der Fig. 3 näher beschrieben. Das Schwenkgehäuse 17 besitzt auf der den Werkzeughalteeinrichtungen 18 und 19 gegenüberliegenden Seite der
zentralen Schwenkachse 16 einen Fortsatz 20, an dem über
ein Gelenk 21 die Kolbenstange 22 eines hydraulischen oder
pneumatischen Schwenkzylinders 23 angelenkt ist, der wiederum
mit seinem entgegengesetzten Ende an einer Gelenkachse 24 gelenkig am Maschinentisch 10 über eine gabelförmige Halterung
25 angelenkt ist. Bei Betätigung des Schwenkzylinders 23 wird
das Schwenkgehäuse in Pfeilrichtung B um die zentrale Schwenkachse 16 verschwenkt, wobei die  Anschläge mittels einstellbarer Anschläge 26 bzw. 27, die jeweils mit einer Dämpfung
ausgestattet sind, begrenzt werden. Zur Einstellung besitzt
jeder Schwenkanschlag 26 bzw. 27 eine Justierschraube 28.

Die beiden Anschläge 26 und 27 sind am Maschinentisch festgeschweißt und befinden sich unterhalb des Maschinentisches und auch unterhalb der Schwenkachse 16. Die Schwenkachse 16 befindet sich ebenfalls unterhalb der durch den Maschinentisch 10 bestimmten Ebene, und das Schwenkgehäuse 17 ragt durch eine Öffnung 29 im Maschinentisch nach oben heraus, wobei der Zwischenraum zwischen den Begrenzungskanten der Öffnung 29 und der Außenfläche des Schwenkgehäuses mittels gegebenenfalls elastischer Dichtungen 30 und 31 gegen das Herabfallen von Spänen abgedichtet ist.

In die beiden Werkstückhalteeinrichtungen 18 und 19 werden Patronenhülsen eingesetzt und bearbeitet, wobei zunächst die Patronenhülse in der Werkstückhalteeinrichtung 18 und dann diejenige in der Werkstückhalteeinrichtung 19 bearbeitet wird. Die Zeichnung zeigt lediglich zwei Werkstückhalteeinrichtungen; es besteht natürlich auch die Möglihkeit, deren drei vorzusehen, wie durch die strichpunktierten Linien bei L angedeutet ist.

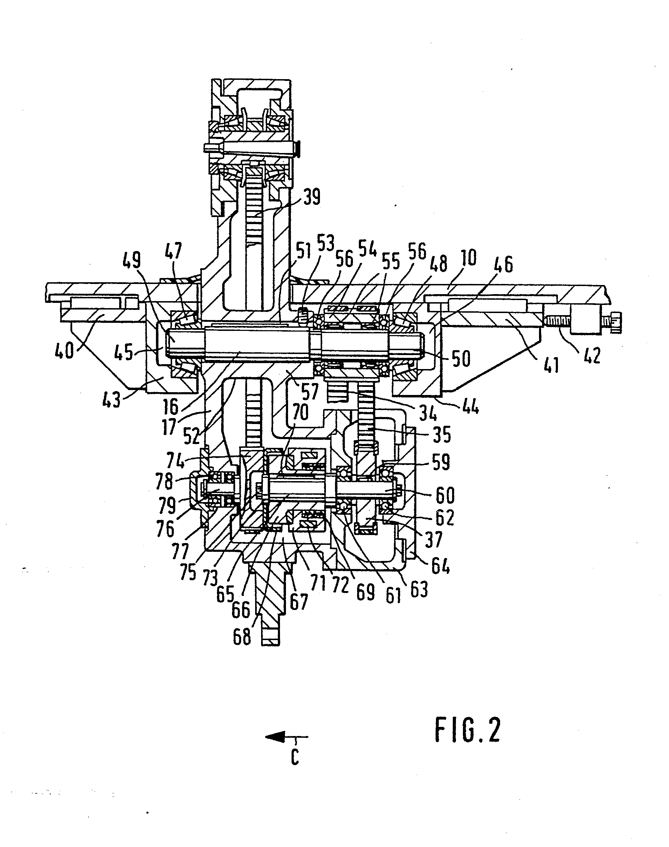

Zusätzlich ist ein Antriebsmotor 32 vorgesehen, der die Werkstückhalteeinrichtungen 18 und 19 antreibt. Der Motor 32 kann ein Elektromotor sein, der auf einem Motorständer 33 gehaltert ist. Die Antriebsenergie vom Motor 32 wird auf die zentrale Schwenkwelle oder zentrale Schwenkachse 16 mittels eines ersten Zahnriemenantriebs 34 übertragen. Selbstverständlich könnte auch ein Kettentrieb oder ein Bandgetriebe vorgesehen sein. Die Schwenkachse treibt nun über einen zweiten Zahnriemenantrieb 35 zwei im Abstand zueinander angeordnete Zahnräder 36 und 37 an, die selbst wiederum über einen dritten bzw. vierten Zahnriemenantrieb 38 und 39 die beiden Werkzeughalteeinrichtungen 18 bzw. 19 antreiben. Die Wirkungsweise dieser einzelnen Getriebe soll anhand der Fig. 2 näher erläutert werden.

Unterhalb des Tisches 10 sind sich gegenüberliegend Tragpratzen 40 und 41 vorgesehen, wobei zumindest die Tragpratze 41 mittels einer Verstellschraube 42 verstellt werden kann. Zu diesem Zweck ist zumindest die Tragpratze 41 in Richtung der Mittelachse der Schwenkachse 16 verschiebbar geführt. Die Tragpratzen sind in an sich bekannter Weise am Tisch geführt, so daß diese Führung hier nicht näher beschrieben zu werden braucht.

Jede Tragpratze besitzt ein Lagergehäuse 43 bzw. 44, in deren Innenräumen 45 bzw. 46 jeweils ein Schrägrollenlager 47 bzw. 48 gelagert ist, die zur Lagerung der Schwenkachse 16 dienen. Zu diesem Zweck besitzt die Schwenkachse 16 maßgenaue Lagerzapfen 49 und 50, die von den Lagern 47 und 48 umfaßt werden.

Die Schwenkachse 16 durchgreift in ihrem linken Bereich die Schwenkbohrung 52 des Schwenkgehäuses 17 und ist in der Schwenkbohrung 52 mittels einer Nut-Feder-Keilverbindung 51 mit dem Gehäuse 17 fest verbunden. Mittels eines Schraubenstiftes 53 wird die Lage der Schwenkachse 16 im Gehäuse bzw. in der Gehäusebohrung oder dem Gehäusedurchbruch 52 fixiert. Im rechten Bereich besitzt die Schwenkachse eine Lagerung für ein Zahnrad 54, die eine Radiallagerung 55 und beidseitig eine Axiallagerung 56 aufweist. Der linke Teil der Axiallagerung 56 stützt sich gegen einen rohrförmigen, die Bohrung 52 umgebenden Fortsatz 57 ab, wogegen die rechts befindliche Axiallagerung 56 gegen den Innenring des Lagers 48 anschlägt.

Das Zahnrad 54 ist zum einen von dem Band des Zahnriementriebes 34 und von dem Band des Zahnriementriebes 35 umfaßt. Der Zahnriementrieb 35 umschlingt zwei Zahnräder 36 und 37, in der Fig. 2 ist nur das Zahnrad 37 zu sehen. Dieses Zahnrad 37 ist auf einer parallel zur Achse 16 verlaufenden Antriebsachse 60 mittels einer Keilverbindung 59 festgekeilt;

die Achse 60 ist mit zwei Lagern 61 und 62 in einem Gehäuse 63 aufgelagert, das gegen den unteren Bereich des Schwenkgehäuses 17 angeschraubt ist. Das Gehäuse 63 ist, wie aus Fig. 1 zu erkennen ist, langgestreckt, da es je beide Zahnräder 36 und 37 aufnehmen muß. Das Zahnrad 36 ist dabei in der gleichen Weise auf einer nicht näher dargestellten, jedoch der Antriebsachse 60 gleichenden zweiten Antriebsachse ebenfalls mit einer Keilverbindung festgekeilt. Nach außen hin ist das Getriebegehäuse 63, wie es auch genannt wird, mittels zweier Abschlußdeckel 64 abgedeckt, wobei die Deckel 64 gleichzeitig auch noch zur Aufnahme der Lager 62 dienen.

Die Antriebsachse setzt sich nach links hin fort und greift mit dem linken Bereich 65 in das Schwenkgehäuse 17 ein. Der linke Bereich 65 der Antriebsachse 60 ist umfaßt von dem Anker 66 einer Elektromagnetkupplung, die insgesamt mit der Bezugsziffer 67 bezeichnet ist. Der Anker 66 besitzt einen radial vorspringenden Flansch 68, an dem sich ein rohrförmiger Fortsatz 69 anschließt, mittels dem der Anker 66 mittels einer Keilverbindung 70 auf der Antriebsachse 60 festgekeilt ist. In einem Spulenkörper 71 ist eine Spule 72 eingebettet, die den Anker in Pfeilrichtung C bewegen kann, so daß er eine Kupplungsscheibe 73 gegen die rechte Stirnfläche eines Zahnrades 74 drücken kann, so daß bei eingerückter Elektromagnetkupplung 67 der Anker 66 das Zahnrad 74 des Getriebes 39 mitnimmt. Die Kupplungsscheibe 73 ist mittels einer Schraubverbindung 75 an der linken Stirnfläche der Antriebsachse 60 befestigt. Insgesamt ist die Kupplung 71, 72,73 unterhalb der Achse 16 im Gehäuse 17 angeordnet. An dem Zahnrad 74 ist ein Lagerzapfen 76 angeformt, der in einer Bohrung 77 im Gehäuse 17 bzw. in der linken Gehäusewand 17 mittels Lagern 78 aufgelagert ist; das Zahnrad 74 ist damit fliegend in der linken Gehäusewand des Gehäuses 17 gelagert. Die Lagerstelle ist mittels eines Lagerdeckels 79 verschlossen.

Über das Zahnrad 74 wird mittels des Bandes 39 die eigentliche Drehvorrichtung in Drehung versetzt.

Zur eigentlichen Beschreibung dieser Drehvorrichtung sei auf die Fig. 3 verwiesen.

Man erkannt in der Fig. 3 teilweise den oberen Bereich des Gehäuses 17 sowie das Zahnriemenband 38, das um eine auf der Außenseite eine Zahnradform aufweisende Drehspindel 80 herumgeschlungen ist, die in einer Bohrung 81 im Gehäuse 17 mittels einer Lagerung 82 aufgelagert ist. Die Halterung der Lager 82 erfolgt in bekannter Weise an einem Gehäuserücksprung 83, einem Rücksprung an der Drehspindel 84 und mittels zweier aufgesetzter Lagerdeckel 85 und 86, die jeweils mit einer Bohrung 87 zur Schmierung versehen sind. Die Drehspindel besitzt einen konischen Durchbruch 88, in dem das Werkstück 89, das eine konische Außenform aufweist und eine Patronenhülse ist, aufgenommen ist. Der konische Durchbruch 88 öffnet sich nach rechts, so daß der Durchmesser D1 rechts größer ist als der Durchmesser D2 auf der linken Seite. An den konischen Durchbruch 88 schließt sich eine stufenförmige Erweiterung 90 an, und durch diese Erweiterung greift der Hülsenhals 91 hindurch und überragt auf der linken Seite die Außenfläche $AF_1$. In gleicher Weise überragt die Patronenhülse 89 auf der rechten Seite die Außenfläche $AF_2$, wobei dort der Ausziehbund 92 mit der Ausziehrille 93 angeformt ist. Insoweit ist die Patronenhülse 89 an sich bekannt.

Außerhalb des Gehäuses 17 und oberhalb desselben befindet sich ein Hauptschlitten 94 mit U-förmiger Gestalt, mit einem Quersteg 95 und zwei senkrecht dazu verlaufenden Schenkeln 96 und 97. Dieser Hauptschlitten wird mittels eines Vorschubzylinders 100 in Richtung der Achse der Drehspindel 80 in Pfeilrichtung $D_1$ bzw. $D_2$ hin- und herverstellt. Der rechts befindliche Schenkel 97 trägt einen mitlaufenden Längsanschlag 98, der mit einem Stempel 99 auf die rechte Stirnfläche der Patronenhülse angedrückt wird, wenn der Hauptschlitten nach links verfahren wird. Dabei wird die Hülse 89 satt in die konische Öffnung 88 eingedrückt, worin sie aufgrund der Reibung festgehalten und auf genaue Drehposition gebracht wird.

Zusätzlich zu dem Hauptschlitten 94 ist ein Abstechschlitten 101 vorgesehen, der auf dem Quersteg 95 des Hauptschlittens in Pfeilrichtung F1 und F2 verschiebbar ist. Dieser Abstechschlitten 101, der am Quersteg 95 in an sich bekannter Weise mittels einer Präzisionsführung geführt ist, trägt ein erstes Werkzeug 102 und ein zweites Werkzeug 103, wobei das erste Werkzeug 102, nämlich der rechte Abstechstahl als Dreh- und Einstechstahl ausgebildet ist und an seinem vorderen Ende eine Drehform aufweist, die die Auszieherrille 93 und den Ausziehbund 92 an der Patronenhülse 89 andreht.

Das Werkzeug 103, z.B. in Form eines Abstechdrehstahls, ist in an sich bekannter Weise mit einer Spitze ausgebildet und an einem Abstechstahlhalter 104 gehalten; das Werkzeug 102 ist ebenfalls an einem Halter 105 befestigt, welche beide 104 und 105 fest auf dem Abstechschlitten 101 befestigt sind. Der Abstand der Werkzeuge 102 und 103 bzw. der Drehstähle ist so bemessen, daß die Patronenhülse 89 exakt auf genaue Länge abgestochen bzw. bearbeitet werden kann, und zwar in einem einzigen Arbeitsgang, nämlich lediglich dadurch, daß der Abstechschlitten 101 von einem Vorschubzylinder 106 in Pfeilrichtung F2 vorgeschoben wird.

Zusätzlich ist an dem linken Schenkel 96 des Hauptschlittens 94 ein Vorschubzylinder 107 für einen sogenannten Entgratschlitten 108 aufgelagert, der nach Abstechen der Patronenhülse auf exakte Länge von links gegen den Patronenhülsenrand angefahren wird, wodurch der links befindliche Patronenhülsenrand entsprechend der Form des Entgratstahls 109 geformt wird. Der Entgratschlitten 108 und der Vorschubzylinder 107 können natürlich auch ortsfest am Gehäuse befestigt sein; sie müssen nicht am Hauptschlitten angebracht sein. Dieses erweist sich im übrigen auch deshalb zweckmäßig,damit der Betätigungsweg des Entgratschlittens 108 nicht zu groß wird.

Mit der erfindungsgemäßen Ausgestaltung, insbesondere mit der Ausgestaltung der Antriebseinrichtung, der Magnetkupplung und der Anordnung des Schwenkgehäuses sowie mit der eigentlichen Bearbeitungseinrichtung für die Patronenhülse wird eine einfache und schnelle Bearbeitung einer Patronenhülse erreicht. Zum einen wird durch die Schwenkbarkeit des Gehäuses 17 eine kurze Bearbeitungszeit möglich, indem nämlich die Bestückung der Drehspindel 80 und die Entfernung der fertigbearbeiteten Patronenhülsen schnell und einfach vorgenommen werden können. Darüber hinaus wird insbesondere durch die gleichzeitige Bearbeitung der beiden Hülsenenden, also das gleichzeitige Formen der Abzieherrille 93 und des Abzieherbundes 92 und die Ablängung der Patronenhülse auf eine exakte Länge, die Bearbeitungszeit der Patronenhülse selbst deutlich verringert. Aufgrund der Elektromagnetkupplung kann erreicht werden, daß nur eine Drehspindel in Betrieb ist, so daß die anderen Drehspindeln be- oder entladen werden können. Damit werden weniger Drehspindeln erforderlich und darüber hinaus dreht sich nur die tatsächlich arbeitende Drehspindel. Die Taktzeiten sind auch deshalb geringer, weil das Schwenken des Gehäuses in kürzerer Zeit vollzogen werden kann, als das Verdrehen eines Drehtisches. Ferner ist auch der Spanabfluß insgesamt besser.

Das Umschalten der Drehspindeln von der Bearbeitungs- zur Ladestation (die in den Fig. nicht näher dargestellt ist), erfolgt zentral mit einem pneumatischen Zylinder, der zusammen mit dem Antriebsmotor in dem Grundgestell angeordnet ist, an dem der Tisch 10 angebracht ist. Das Ausrichten und Festhalten der Hülse erfolgt ausschließlich durch Haftreibung über den Konus der Hülse und darüber hinaus steht der Drehschlitten bzw. der Hauptschlitten 94 ständig über der sogenannten Drehstation, d.h. der Werkstückhalteeinrichtung, in Kontakt. Sobald die unbearbeitete Hülse in der Drehspindel sitzt, wird über den Pneumatik- oder Hydraulikzylinder 100 der Schlitten 94 in Pfeilrichtung P1 bewegt, so daß der Stempel 99 gegen die Hülse anschlägt. Danach wird der Schlitten 101 mittels des Zylinders 106 betätigt, die Patronenhülse gleichzeitig an beiden Enden bearbeitet und schlußendlich wird auch die Entgratung vorgenommen. Danach fahren die einzelnen Zylinder 100, 106 und 107 wieder in die Ausgangsposition zurück, das Schwenkgehäuse 17 verschwenkt in die nächste Stellung, in der die nächste Werkstückhalteeinrichtung in der richtigen Lage unterhalb des Hauptschlittens sitzt, und der Bearbeitungsgang wird bei der nächsten Patronenhülse begonnen; gleichzeitig wird die fertig bearbeitete Patronenhülse aus der Drehspindel herausgedrückt. Aufgrund der Tatsache, daß lediglich eine Drehspindel bei jedem Bearbeitungsgang in Betrieb ist, wird auch die Lebensdauer der gesamten Einrichtung, die ja wesentlich von der Lebensdauer der einzelnen Drehspindeln und dem Getriebe, das die Drehspindeln antreibt, abhängt, erhöht.

Die Erfindung ist oben anhand eines Ausführungsbeispiels beschrieben worden. Selbstverständlich soll dadurch der Schutzumfang der Erfindung nicht eingeschränkt werden. So sind anstatt der Elektromagnetkupplungen mechanische Ausrückkupplungen denkbar, bei denen die Krafterzeugung auf die Kupplung hydraulisch oder pneumatisch erfolgt. Weiterhin können anstatt der Zahnriemengetriebe auch andere Getriebe verwendet werden, z.B. Ketten- oder Riementriebe. Denkbar sind auch Zahnradgetriebe, was dann zur Folge hätte, daß der Antriebsmotor näher an das Schwenkgehäuse herangebracht werden müßte. Zahnradgetriebe wären dabei ebenfalls sehr günstig in dem Schwenkgehäuse unterzubringen.

0123290

Nachzutragen ist noch folgendes: Wie oben erwähnt, dient die Schwenkachse 16 sowohl zur Auflagerung des Gehäuses als auch zum Antrieb der Drehspindeln. Der Antrieb der einzelnen Drehspindeln erfolgt über ein Zahnriemengetriebe, das einen um die Drehspindeln herumgeschlungenen Zahnriemen aufweist. Dies hat zur Folge, daß die Drehspindel nicht mit einem eigenen Zahnrad ausgestattet ist, sondern daß die Drehspindeln selbst die Zähne aufweisen, die mit dem Zahnriemen in Eingriff stehen. Diese Zähne sind auf der Umfangsfläche der Drehspindeln angeformt.

PATENTANWÄLTE
ZELLENTIN
ZWEIBRÜCKENSTR. 15
8000 MÜNCHEN 2

0123290

Ingenieurbüro Hermann Dietrich          19. April 1984
6700 Ludwigshafen                       K/Hu

                                        Eu 84 316

Patentansprüche

1. Einrichtung zur Drehbearbeitung von langgestreckten,
   zylinderförmigen oder leicht konischen Werkstücken (89),
   insbesondere von Patronenhülsen für Feuerwaffen, mit wenigstens zwei motorgetriebenen, das Werkstück (89) aufnehmenden, in einem Gehäuse gelagerten Drehspindeln (80,
   80), sowie Bearbeitungswerkzeugen (102,103,109) zur Bearbeitung des Werkstückes (89),
   d a d u r c h  g e k e n n z e i c h n e t ,
   daß das Gehäuse (17) auf einer Achse (16) gelagert und
   mittels einer hydraulischen oder pneumatischen Betätigungsvorrichtung (22,23) aus einer Anfangsstellung, in
   der sich ein erstes Werkstück (89) in Bearbeitungsstellung befindet, schrittweise in je eine weitere Stellung,
   in der die nächstfolgenden Werkstücke sich in Bearbeitungsstellung in den Drehspindeln (80,80) befinden und
   nach Bearbeitung aller Werkstücke wieder gegebenenfalls
   schrittweise zurück verschwenkbar ist.

2. Einrichtung zur Drehbearbeitung nach Anspruch 1, dadurch
   gekennzeichnet, daß als hydraulische oder pneumatische
   Betätigungsvorrichtung (22,23) eine Kolben-Zylinder-Anordnung (23) vorgesehen, die an dem Gehäuse (17) angelenkt ist und das Gehäuse schrittweise um die Achse (16)
   schwenkt.

3. Einrichtung nach Anspruch 1 oder 2, dadurch gekennzeichnet, daß die Achse (16) und die Drehspindeln (80) horizontal verlaufend an der Einrichtung angeordnet sind.

4. Einrichtung nach einem der Ansprüche 1 bis 3, mit einem horizontal ausgerichteten Tisch (10), auf dem ein Auslegerarm (11) senkrecht nach oben verlaufend befestigt ist, an dem eine Werkzeughalteeinrichtung senkrecht auf- und abbewegbar angebracht ist, dadurch gekennzeichnet, daß die Achse (16) unterhalb der Ebene des Tisches (10) angeordnet ist, daß das Gehäuse durch eine Öffnung (29) am Tisch (10) hindurchgreift und daß die Achse (16) des Gehäuses (17) so ausgerichtet ist, daß der die Drehspindeln (80) aufnehmende Bereich des Gehäuses zum Auslegerarm (11) hin- und von diesem wegschwenkbar ist, dergestalt, daß die nebeneinander angeordneten Drehspindeln sich schrittweise unterhalb des Werkzeughalters vorbeibewegen.

5. Einrichtung insbesondere nach einem der vorigen Ansprüche, dadurch gekennzeichnet, daß die Achse (16) mittels eines Motors (32) angetrieben ist und daß zwischen der Achse und jeder Drehspindel (80) jeweils ein eigenes, an die Achse antriebsmäßig ankuppelbares Getriebe (38,39) vorgesehen ist.

6. Einrichtung nach Anspruch 5, dadurch gekennzeichnet, daß die Drehbewegung der Achse (16) mittels eines vorzugsweise Zahnriementriebes auf wenigstens zwei Getrieberäder (36,37) übertragbar ist und daß die Drehbewegung der Getrieberäder (36,37) jeweils mittels eines weiteren Getriebes, vorzugsweise eines Zahnriemengetriebes (38,39) den Drehspindeln zuführbar ist.

7. Einrichtung nach Anspruch 6, dadurch gekennzeichnet, daß die Zahnräder (36,37) jeweils auf einer Antriebsachse (60) befestigt sind, die mittels einer Kupplungseinrichtung (71,72,73) mit einem Getriebezahnrad (74) für jeden Antrieb (38,39) der Drehspindeln (80) kuppelbar ist, wobei die Kuppeleinrichtung eine elektromagnetische Kupplung mit einer ansteuerbaren Spule (72) und einem mit der Antriebswelle drehfest verbundenen, axial auf dieser verschiebbaren, von der Spule (72) betätigbaren Anker aufweist, der von der Spule gegen das benachbarte Getriebezahnrad unter Zwischenfügung einer Kupplungsscheibe zur Ankupplung des Getriebezahnrades (74) an die Antriebsachse (60) andrückbar ist.

8. Einrichtung insbesondere nach einem der vorigen Ansprüche, wobei das langgestreckte Werkstück mittels eines Werkzeuges an einem Ende und mittels eines weiteren Werkzeuges am anderen Ende bearbeitet wird, dadurch gekennzeichnet, daß die beiden Werkzeuge (102,103) an einem Schlitten (101) befestigt sind, der auf einem in Richtung der Längsachse der Drehspindel (80) hin- und herbewegbaren Hauptschlitten (94) verschiebbar angebracht ist.

9. Einrichtung nach Anspruch 8, dadurch gekennzeichnet, daß der Hauptschlitten (94) U-förmig ausgebildet ist und daß beide Schenkel die Mittelachse der Drehspindel überdecken und daß wenigstens an einem der Schenkel ein auf das Werkstück in der Achsrichtung zu bewegbarer mitlaufender Längsanschlag (98) angebracht ist.

10. Einrichtung nach Anspruch 8, bei der als Werkstück eine Patronenhülse vorgesehen ist, die konisch ausgebildet ist, und bei der der Hohlraum der Drehspindel zur Aufnahme des konischen Werkstückes ebenfalls konisch verläuft, dadurch gekennzeichnet, daß der Konus in Richtung des mitlaufenden Längsanschlages (98) geöffnet ist, dergestalt, daß das konisch ausgebildete Bauteil mittels des Längsanschlages (98) aufgrund der Bewegung des Hauptschlittens (94) in die Drehspindel (80) hineingedrückt ist.

0123290

1 / 3

FIG.1

0123290

FIG.2

0123290

FIG.3